# EUROPEAN PATENT SPECIFICATION

(11) **EP 0 433 095 B1**
(45) Date of publication and mention of the grant of the patent: **27.08.1997**
(21) Application number: 90313721.4
(22) Date of filing: 14.12.1990
(51) Int. Cl.: G06F 13/16, G06F 15/16

(54) **Exclusive memory region control system**
Steuerungssystem für einen exklusiven Speicherbereich
Système de commande d'une région de mémoire exclusive

(30) Priority: 15.12.1989 JP 326675/89
(43) Date of publication of application: 19.06.1991
(73) Proprietor: FUJITSU LIMITED, Kawasaki-shi, Kanagawa 211 (JP)
(72) Inventor: Sekizuka, Hiroyuki, 405 Sakae Building, 1-18, Tokorozawa-Shi, Saitama 359 (JP)
(74) Representative: Fane, Christopher Robin King

(56) References cited:
- EP-A- 0 142 820
- WO-A-89/06011

## Description

The present invention relates to an exclusive memory region control system for performing an exclusive control of an exclusive memory region in a main memory. Such an exclusive memory region may be provided in a main memory of a computer and exclusive control of the region may be implemented by using a hardware lock. However, if a plurality of units or apparatuses (such as a CPU and an input/output processing unit) frequently access the exclusive memory region, the loss of the time due to competition between these units should be decreased, thus increasing the whole process speed.

Generally speaking, when a CPU accesses a main memory, a hardware lock and a software lock of the main memory are performed.

For example, exclusive memory region control circuitry is known for use in computing apparatus having a main memory to which a plurality of different units have access, a region of which main memory can be made subject to a software lock, designating that the region is reserved for the exclusive use of one of the units, by storing predetermined lock data in a small control area of the region. The circuitry may be considered to include: hardware lock control means connected to the said units for receiving therefrom access addresses designating respective addresses in the main memory that are to be accessed by the units, and operable, when such an access address received from one of the units matches a lock address designating an address in the main memory that is subject to a hardware lock, to deny the unit concerned access to the main memory; and software lock control means operable, when such a software lock is to be applied to such a region of the main memory, to read the small control area of the region and to determine, if any such predetermined lock data is stored therein, that the region is already subject to such a software lock and, if not, to apply such a software lock to the region, the software lock being applied to the region by the software lock control means at a time when the hardware lock is applied to the small control area of the region by the hardware lock control means.

In such circuitry, the hardware lock is performed by storing the address of the exclusive control region to be locked as a lock address in a lock address register in a memory control unit, comparing the lock address with each subsequent address to be accessed (access address) and cancelling that access when the access address matches the lock address.

Such a software lock is implemented by causing the CPU (or an input/output processing unit) to write, in a small control area of the exclusive control region to be accessed, information (1) designating that the exclusive memory region is locked. This enables the CPU or the input/output processing unit to ascertain, by reading, whether or not the exclusive control region is locked.

The hardware lock is applied to a limited number of exclusive memory regions; at any particular time the hardware lock is only applied to the address which is stored in the lock address register at that time. The software lock on the other hand can be applied simultaneously to a plurality of exclusive control regions by writing 1 in respective such small control areas in the main memory.

The hardware lock is executed only when the respective small control areas are accessed to update the software lock. The software lock is executed when a CPU or input and output process unit desires to make exclusive use of an exclusive control region for a certain period of time. Therefore, the number of exclusive memory regions to which a hardware lock can be applied at a given time corresponds (is limited) to the number of lock address registers in the main memory control unit. The software lock on the other hand can lock a plurality of exclusive memory regions at any given time.

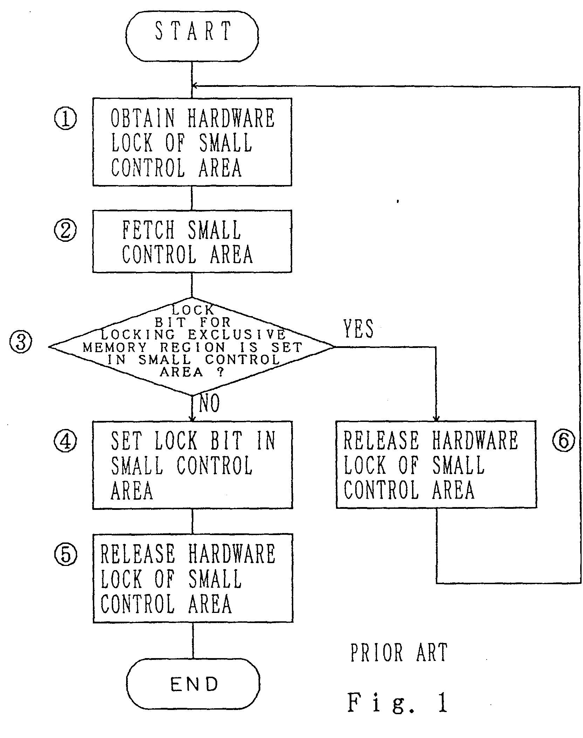

Referring to Figure 1, consider a situation in which apparatus A, not shown, tries to obtain an updating right for an exclusive memory region which is already being updated (exclusively used) by apparatus B, not shown. A hardware lock is applied to the small control area of the exclusive memory region and then the content of the small control area is read by apparatus A as shown in steps 1 and 2 in the flowchart of Figure 1.

The hardware lock is applied to the small control area of the exclusive memory region to read the content thereof and it is judged whether the exclusive memory region is subjected to the software lock. When the apparatus A determines that the exclusive memory region is being updated by the apparatus B, that is, the small control area of the exclusive memory region stores "1", the exclusive control region is subjected to the software lock of the apparatus B (as shown by YES in step 3 in Figure 1) and accordingly the hardware lock of the small control area is unlocked as shown in step 6 in Figure 1 and then the small control area is again locked by the hardware as shown in step 1 in Figure 1. Thus, the operation of reading the content of the small control area is repeated and a loop of steps 1, 2, YES of step .3 and step 6 is repeated until step 3 produces NO.

When apparatus B abandons the updating right and thereafter apparatus A obtains the updating right, apparatus A locks the small control area by means of hardware and sets the lock bit by means of software (software lock), thereby writing the information designating that the small control area is being updated by apparatus A, as shown in step 4, and then releases the hardware lock of the exclusive memory region so that apparatus B can access the small control area of the exclusive memory region, as shown in step 5.

The above conventional example is further explained by referring to the time chart.

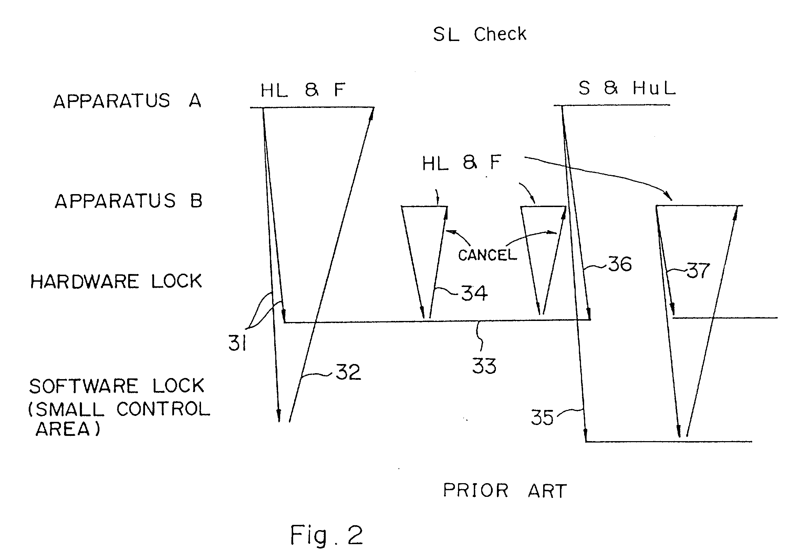

Figure 2 shows the time chart of the case where firstly the apparatus A and then the apparatus B try to execute a software lock of an exclusive memory region not yet subjected to a software lock.

The symbols used in the time chart have the following meanings.

HL & F: obtaining the hardware lock and fetching the content of the small control area.

SL check-: judging the existence of the software lock.

S & HuL: storing the lock bit in the small control area, i.e. obtaining the software lock, and releasing the hardware lock.

The lock and fetch by apparatus B are kept waiting by the hardware lock of apparatus A. As shown at 31, the hardware lock is always applied in the prior art when the software lock is to be applied. The small control area, which includes a lock pattern designating whether the software lock is applied, is read after the hardware lock is applied, as shown in 32. After apparatus A has subjected the small control area to the hardware lock as shown in 33, the operation of obtaining the hardware lock and reading the small area is tried by apparatus B, but this operation is cancelled as shown in 34. Therefore, apparatus B repeats the operation of attempting to perform the hardware lock until the hardware lock by apparatus A is released. Therefore, the operation of obtaining the hardware lock and reading the small control area by apparatus B is delayed. After apparatus A has written the lock pattern in the small control area, i.e., has performed updating as shown in 35, apparatus A releases the hardware lock as shown in 36. Only at this stage can apparatus B perform the hardware lock so as to lock the small control area and check for an existing software lock, as shown in 37.

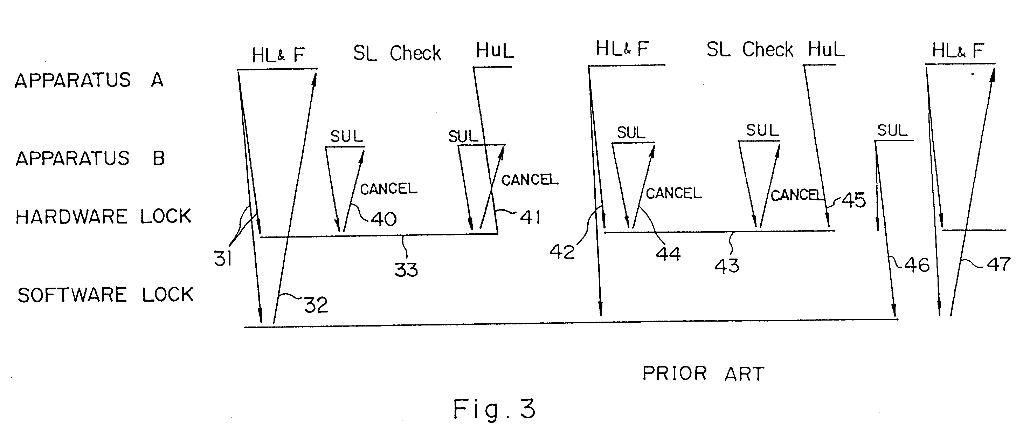

Figure 3 shows a time chart for another prior art situation, in which apparatus B has-already performed the software lock and then apparatus A tries to perform the software lock. The symbols used in the time chart have the following meanings.

HuL: releasing the hardware lock.

SuL: releasing the software lock, namely, clearing the lock bit in the small control area.

As shown in 31, in the prior art, apparatus A or B always applies the hardware lock when it seeks to apply the software lock. After the hardware lock is applied to the small control area (by apparatus A in this example), the small control area in which the software lock is to be stored is read (32), but at this time the software lock by apparatus A cannot be accepted. However, when the hardware lock by apparatus A is effective, as shown in 33, the SuL operation, i.e. the operation to release the software lock, by apparatus B is cancelled, as shown in 40, due to the hardware lock by apparatus A because in the software lock release operation the address necessary for accessing the small control area is produced to change the lock bit stored in the small control area from 1 to 0. As the content read from the small control area by apparatus A is 1, apparatus A unlocks the hardware lock (41) in accordance with step 6 shown in Figure 1, and apparatus A does not update the software lock. If, before apparatus B accesses the main memory, apparatus A again tries to perform the hardware lock, as shown in 42, then the hardware lock by apparatus A is maintained (43). When, during this period, apparatus B tries to access the small control area to perform SuL, i.e., the release of the software lock, such access is cancelled as shown in 44. Only when the hardware lock of apparatus A is released, as shown in 45, can apparatus B release the software lock, as shown in 46.

At this time, apparatus A can perform the hardware lock and fetch the content of the small control area to perform the software lock (47).

Therefore, the release of the software lock by apparatus B is delayed due to the hardware lock by apparatus A. As a result, the software lock by apparatus A is also delayed to beyond the point shown by 47 in Figure 3.

As described above with reference to Figure 3, apparatus A tries to obtain the right (updating right) to update an exclusive memory region which is already being updated by apparatus B, i.e., is already subject to a software lock by apparatus B. Apparatus A repeats the operation of obtaining and releasing the hardware lock of the small control area by repeating the loop of steps 1, 2, YES of step 3 and step 6, shown in Figure 1, even if it cannot obtain the updating right. As a result, when apparatus B wishes to release the updating right, i.e., release the software lock, it has difficulty in accessing the small control area and thus repeats the access to the small control area. Thus, apparatus B cannot release the updating right quickly. As apparatus A repeats the operation of obtaining and releasing the hardware lock, apparatus B has difficulty in updating the small control area. Thus, apparatus B has difficulty in releasing the software lock.

Exclusive memory region control circuitry embodying the present invention is characterised in that the said software lock control means are operable to read the small control area of the region to which such a software lock is to be applied without first applying such a hardware lock to that area, and to cause the hardware lock to be applied to that area only if it is determined from such reading of the small control area that the region is not already subject to such a software lock.

Such exclusive memory region control circuitry can read the small control area of an exclusive memory region without a hardware lock, obtain a hardware lock when it is judged that the region is not already being used (updated) by another unit (process) and write information (predetermined lock data) designating that the region is being used (updated), preferably after checking again that the region has not in the meantime been reserved by another unit, and thereafter can perform release of the hardware lock, thereby shortening the time required for obtaining the hardware lock and achieving a faster operation of the system.

In updating the exclusive memory region in an exclusive manner, apparatus A reads the content of the small control area of the exclusive memory region without the hardware lock, applies the hardware lock to the small control area using the hardware lock control system when the content indicates that the exclusive memory region is not being updated by another apparatus B ("0" is stored in the small control area), stores in the small control area the data "1" designating that it (apparatus A) is updating the exclusive memory region, and then releases the hardware lock on the small control area.

Apparatus A reads the small control area of the exclusive memory region without the hardware lock and obtains the hardware lock when it is determined that the apparatus B is not updating the exclusive memory region. Then, it again fetches the content of the small control area and writes the data designating the updating in the small control area to indicate that the exclusive memory region is being updated. It thereafter releases the small control area and then performs an exclusive access to the exclusive memory region. Accordingly, when apparatus A accesses the exclusive memory region in the main memory, it can read the small control area without the hardware lock, thereby shortening the time required for obtaining the hardware lock and realising a high speed process of the subject program.

Reference will now be made, by way of example, to the accompanying drawings, in which:
Figure 1 shows a flowchart of a process for obtaining a lock in a prior art exclusive memory region control system;
Figure 2 shows a time chart of a first example of operation of the Figure 1 system;
Figure 3 shows a time chart of another example of operation of the Figure 1 system;
Figure 4 shows a block diagram of an exclusive memory region control system embodying the present invention;
Figure 5 shows a flowchart of a process for obtaining a lock in the Figure 4 system;
Figure 6 shows a block diagram showing in more detail parts of the Figure 4 system; and
Figure 7 shows a time chart of the operation of the Figure 4 system.

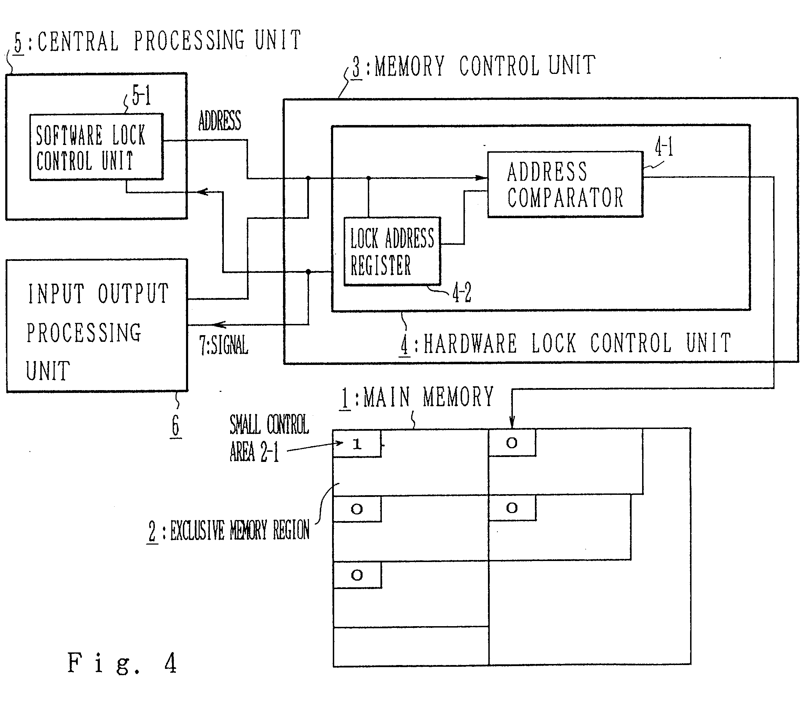

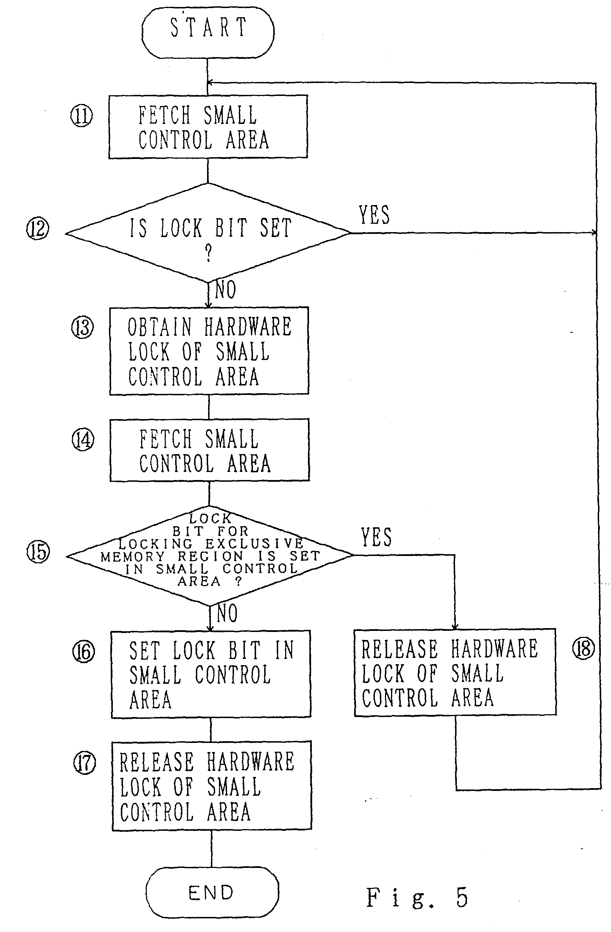

The structure and operation of a preferred embodiment of the present invention is explained by referring to Figures 4 and 5.

In Figure 4, main memory 1 stores data and comprises exclusive memory region 2.

Exclusive memory region 2 can be exclusively updated by central processing unit 5 (apparatus A) or by input and output process apparatus 6 (apparatus B), for example, and is used for inter-communication between them.

Exclusive memory region 2 has a small control area 2-1 for storing predetermined control data designating whether or not the exclusive memory region is currently being updated, i.e., designating whether or not the exclusive memory region is currently subject to a software lock (such a software lock being applied after application of a hardware lock).

The small control area 2-1 stores the control data (designating whether the exclusive memory region 2 is being updated) in the head of the exclusive memory region 2 provided in the main memory 1. In this embodiment the control data comprises a lock bit for designating whether or not the exclusive memory region is being updated; when the lock bit is 1 this designates that the exclusive memory region is being updated; and when the lock bit is 0 this designates that the exclusive memory region is not being updated.

A memory control unit 3 performs an access control for main memory 1. It comprises a hardware control system for performing the hardware lock control.

Hardware lock control system 4 performs the hardware lock of the small control area 2-1 of the main memory 1. An address comparator 4-1 compares a lock address stored in the lock control address register 4-2 with an access address (i.e. an address in the main memory to be accessed) notified from central processing unit 5 or input output processing unit 6 and performs the hardware lock by preventing subsequent access to the main memory 1 when the lock address matches the access address. When the central processing unit 5 cannot apply the hardware lock, the central processing unit 5 is kept waiting until the hardware lock is established. However, when the input/output processing unit 6 cannot obtain the hardware lock it notifies the central processing unit 5 that the hardware lock cannot be obtained by the input/output processing unit.

Software lock control means 5-1 in the central processing unit 5 judges the content (lock bit) read from the small control area 2-1 without applying the hardware lock. When the data (lock bit) indicates that updating of the exclusive memory region 2 is not currently being performed, the software lock control means 5-1 issues a lock access request to memory control unit 3 so as to apply the hardware lock to the small control area 2-1. The software lock control means 5-1 again reads the content of the small control area 2-1 and determines once again that the exclusive memory region is not being updated. Then updating information is written (lock bit set) in the small control area and the hardware lock is released as described with reference to steps 11 to 17 in the later explanation of Figure 5. If, however, it is found that the exclusive memory region is being updated, as shown in step 12 YES in Figure 5, the software lock control means 5-1 repeats reading of the content of the small control area 2-1 without applying the hardware lock

Signal 7-0 is used to inform the CPU 5 or input/output processing unit 6 that the access to the exclusive memory region 2 is cancelled.

The operation of the structure of Figure 4 is explained in detail in accordance with sequence shown by the flowchart of Figure 5.

In Figure 5, step 11 shows a fetch operation of the small control area 2-1. Step 11 reads the content (fetches the content) of the small control area 2-1 of Figure 4 without obtaining the hardware lock. In step 12 it is determined whether the lock bit is set in the small control area 2-1. When the result of step 12 is YES, i.e., the lock bit is set in the small control area and the exclusive memory region is being updated, step 11 is performed again. When the result of step 12 is NO, i.e., the lock bit is not set in the small control area signifying that the exclusive memory region is not already being updated, step 13 and the following steps are performed.

Step 13 obtains the hardware lock of the small control area 2-1.

Step 14 carries out a read (or fetch) of the content of small control area 2-1 which was made the subject of the hardware lock in step 13. Step 15 determines whether the lock bit is set in the small control area. This step is performed to again judge whether the lock bit has been set in the small control area by another apparatus B during the short period from steps 13 to 14, even though it has already been judged in step 12 (NO) that the lock bit is not set in the small control area. In case of YES in step 15, i.e., the lock bit has been set in the small control area by the other apparatus B during the short period from steps 13 to 14, step 18 releases the hardware lock of the small control area 2-1 and repeats the operation of step 11. In case of NO in step 15, i.e., the lock bit is not set in the small control area, the lock bit is set in step 16 so that the data designating that the exclusive memory region is being updated is written in small control area 2-1. After completing its exclusive updating of the content of exclusive memory region 2 is the apparatus A obtains the hardware lock of small control area 2-1, stores the data designating that the exclusive memory region 2 is not updated and releases the hardware lock in step 17.

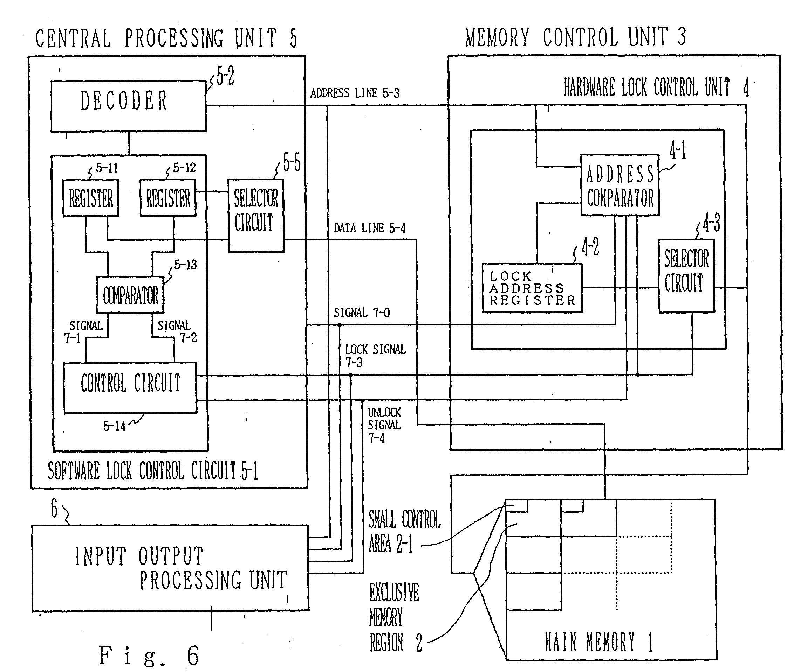

Figure 6 shows a detailed block diagram of the preferred embodiment of the present invention.

Software lock control circuit 5-1 provided in the central processing unit 5 in the apparatus A comprises registers 5-11 and 5-12, comparator 5-13 and control circuit 5-14. When a decoder 5-2 of the central processing unit 5 transmits an access address to the memory control unit 3 in the main memory 1 through address line 5-3 to perform a read or write operation in the exclusive memory region 2 in the main memory 1, apparatus B is prevented from accessing the exclusive memory region. This is controlled by the lock pattern which is employed to set the lock bit of the small control area of the exclusive memory region to be 1 when the software lock is applied to the exclusive memory region. This lock pattern is kept in register 5-11. The lock pattern relating to the current status of the exclusive memory region is read from the small control area 2-1 of the exclusive memory region using as the present access address the address of the small control area, and is set in register 5-12 via data line 5-4 and selector circuit 5-5. The lock pattern stored in the small control area can be read when the small control area is not already subject to the hardware lock, i.e. when the content (lock address) of the lock address register 4-2 in the memory control unit 3 is different from the access address. However, when the access address matches the lock address, the lock pattern cannot be read from the main memory 1 and thus the CPU confirms that the exclusive memory region with the access address is already subject to the hardware lock by apparatus B. When the register 5-12 can read the lock pattern (because there is no hardware lock), comparator 5-13 compares the content (lock pattern) of the register 5-11 with the current lock pattern stored in register 5-12. When the exclusive memory region with the access address is not subjected to the software lock, the lock pattern of register 5-12 is 0 and the lock bit pattern corresponding to the access address transmitted from CPU 5 of apparatus A and stored in register 5-11 is 1, and thus the non-coincident signal 7-2 becomes 1 as a result of comparison between the content of register 5-11 and that of register 5-12.

Signal 7-3 is a lock signal corresponding to step 13 in Figure 5 and designates that the hardware lock of the small control area is obtained. Signal 7-4 is an unlock signal corresponding to steps 17 and 18 in Figure 5 and designates that the lock by the hardware of the small control area is released when signal 7-4 is on.

If the result of the action of comparator 5-13 is that the lock pattern stored in register 5-11 matches the current lock pattern stored in the register 5-12, this indicates that the lock bit is stored in the small control area. In step 12 in Figure 5 apparatus A repeats the fetch of small control area 2-1 from'main memory 1 without applying the hardware lock to the small control area 2-1.

When, as a result of the comparison in comparator 5-13, it is determined that the lock pattern stored in register 5-11 does not match the current pattern stored in register 5-12 control circuit 5-14 enables lock signal 7-3 to be 1, thereby enabling the hardware lock of the small control area 2-1 to be obtained (step 13 in Figure 5). That is, the access address is input to lock address register 4-2 through the gate circuit 4-3 enabled by lock signal 7-3. Therefore, in this case, the hardware lock is applied to the access address and thereafter apparatus B is prohibited from accessing the small control area. When apparatus B tries to access the same address as the lock address, address comparator 4-1 produces the cancel signal 7-0 for cancelling the access (sets that cancel signal to 1) and cancels accesses from other apparatuses.

Once other apparatuses have been prohibited from accessing the small control area, the content (lock bit) of the small control area is again fetched from the main memory and set in register 5-12, as shown in step 14 in Figure 5.

The comparator 5-13 determines in step 15 in Figure 5 whether the lock bit stored in register 5-12 is set (logic 1). If it is not (step 15 NO), it is then set therein as shown in step 16 in Figure 5, the lock pattern is written in the small control area in the main memory via the data line 5-4 and the selector circuit 5-5 from register 5-11, and the hardware lock of the small control area is released as shown in step 17 in Figure 5. That is, the unlock signal 7-4 is made active and the subsequent lock address comparisons by the address comparator 4-1 are inhibited and the release of the lock is notified to the CPU 5 or the input/output processing unit 6. When the lock bit is already set in register 5-12 (step 15 YES in Figure 5), the lock bit is not reset therein. Unlock signal 7-4 turns to 1 and the release of the hardware lock of the control small area is notified to address comparator 4-1, CPU 5 or input/output processing unit 6 as shown in step 18 in Figure 5. Selecting circuit 5-5 selectively connects registers 5-11 and 5-12 to the main memory.

When the unlock signal 7-4 becomes 1, subsequent lock address comparisons are inhibited. The lock address register is reset and thus apparatus B can access the main memory. Conversely, when the lock signal 7-3 turns to 1, the lock address is set in lock address register 4-2 and the hardware lock is established so that apparatus B cannot access the lock address.

As described above, an exclusive memory control system embodying the present invention detects whether the software lock is established in the exclusive memory region. If it is, the process is kept waiting as shown in steps 11 and 12 in Figure 5 until it is released. If the software lock is not established, then the hardware lock is applied to the small control area and then the software lock is applied to the exclusive memory region. Therefore, even if the software lock is established, the lock status of the exclusive memory region can be detected without the hardware lock.

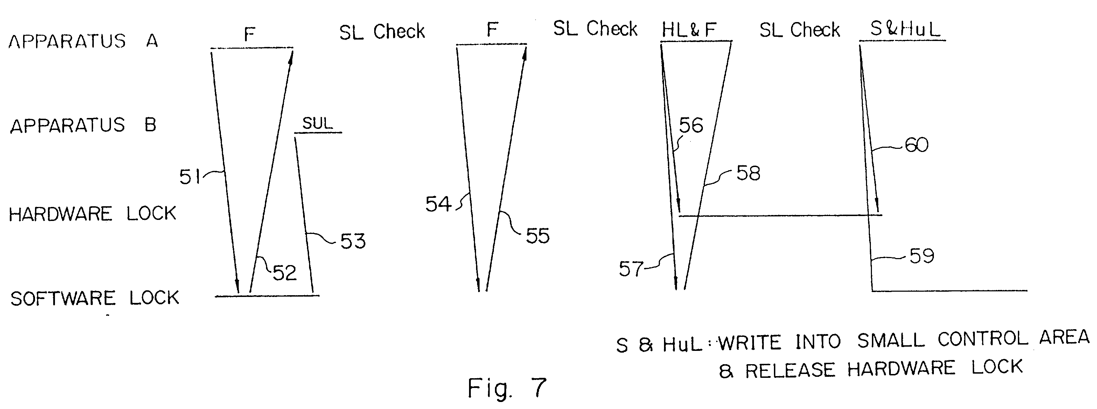

The operation of the Figure 4 embodiment is now explained by referring to the time chart of Figure 7. As shown in Figure 7, at the start, apparatus A reads the small control area (51) without applying the hardware lock and then fetches the content of the small control area (52). At this time that content is 1 because the software lock has been applied by apparatus B. After apparatus B releases the software lock (53), apparatus A reads the small control area (54) and fetches the content which is now 0 (55) . In this way, after apparatus B releases the software lock (53), apparatus A detects that the lock bit is no longer set in the exclusive memory region.

Only during this period can apparatus A apply the hardware lock (56) against the other apparatus B. Thereafter, when the hardware lock is applied to the small control area, the apparatus A re-reads (fetches) (57) the content of the small control area (58) and (provided the lock bit is still reset) apparatus A writes the lock bit in the small control area so as to apply the software lock (59). Thereafter, apparatus A releases the hardware lock (60). As shown in 53, apparatus B can release the software lock quickly and apparatus A can perform the software lock as shown by 59 without being interrupted by the hardware lock by apparatus B.

As described above, in an exclusive memory region control system embodying the present invention, the small control area 2-1 of the exclusive memory region 2 is read without the hardware lock and when it is determined that the exclusive memory region is not being updated, the hardware lock is obtained. Then, when it is again determined that the small control area is not being updated, the updating status (lock bit) is written into the small control area 2-1 and the hardware lock is released, thereby enabling the updating operation of the exclusive memory region 2 to be performed exclusively. The time over which the small control area 2-1 is kept locked by the hardware is shortened and the competition between the processes is decreased, thereby enabling the software lock to be quickly obtained after it is released, thus realising a high speed processing of the subject program.

## Claims

1. Exclusive memory region control circuitry, for use in computing apparatus having a main memory (1) to which a plurality of different units (5,6) have access, a region (2) of which main memory can be made subject to a software lock, designating that the region is reserved for the exclusive use of one of the units, by storing predetermined lock data in a small control area (2-1) of the region, which circuitry includes:
hardware lock control means (4) connected to the said units (5,6) for receiving therefrom access addresses designating respective addresses in the main memory (1) that are to be accessed by the units, and operable, when such an access address received from one of the units matches a lock address designating an address in the main memory that is subject to a hardware lock, to deny the unit concerned access to the main memory; and
software lock control means (5-1) operable, when such a software lock is to be applied to such a region (2) of the main memory (1), to read the small control area (2-1) of the region (2) and to determine, if any such predetermined lock data is stored therein, that the region is already subject to such a software lock and, if not, to apply such a software lock to the region, the software lock being applied to the region by the software lock control means at a time when the hardware lock is applied to the small control area of the region by the hardware lock control means (4);
characterised in that the said software lock control means (5-1) are operable to read the small control area (2-1) of the region (2) to which such a software lock is to be applied without first applying such a hardware lock to that area, and to cause the hardware lock to be applied to that area only if it is determined from such reading of the small control area that the region is not already subject to such a software lock.

2. Exclusive memory region control circuitry according to claim 1, wherein the said software lock control means (5-1) comprise:
a first register means (5-11) for storing a predetermined lock pattern employed to store the said lock data in the small control area (2-1);
a second register means (5-12) for storing information read from the small control area (2-1) of such a region (2) of the main memory (1);
a comparison means (5-13) for comparing the content of the said first register means (5-11) and that of the said second register means (5-12); and
a control means (5-14) operable, when the said comparison means determines that the respective contents of the first and second register means (5-11, 5-12) are inconsistent with one another, to produce a lock signal (7-3) enabling the said hardware lock control means (4) to apply such a hardware lock to the said small control area (2-1), and also operable to read the said small control area again after the hardware lock-is established and to produce an unlock signal (7-4) requesting the said hardware lock control means (4) to release the hardware lock when the said comparison means (5-13) determines that the respective contents of the first and second register means (5-11, 5-12) are consistent with one another.

3. Exclusive memory region control circuitry according to claim 2, wherein the said control means (5-14) repeats the operation of reading the said information of said small control area, without causing the hardware lock to be applied to the said small control area, until the said comparison means (5-13) determines that the respective contents of the first and second register means (5-11, 5-12) are mutually inconsistent.

4. Exclusive memory region control circuitry according to claim 2 or 3, wherein said control means (5-14) are also operable, when the said small control area (2-1) is read again after the hardware lock is established and the said comparison means (5-13) determines that the respective contents of the first and second register means (5-11, 5-12) are mutually inconsistent, to produce such an unlock signal, for releasing the hardware lock, after storage of the lock data in the said small control area (2-1).

5. Exclusive memory region control circuitry according to claim 2, 3 or 4, wherein the said hardware lock control means (4) comprises:
a lock address register (4-2) for registering the said lock address presently designated as being subject to a hardware lock;
address comparison means (4-1) for comparing such an access address with the content of said lock address register (4-2); and
control means operable, when the said lock signal (7-3) becomes valid, to cause such a lock address to be registered in the said lock address register (4-2), thereby enabling operation of the said address comparison means (4-1) such that a cancel signal (7-0), cancelling access to that access address, is produced thereby when the result of the comparison made by the address comparison means (4-1) is that the access address matches the lock address, and also operable to inhibit the operation of the address comparison means (4-1) when the unlock signal (7-4) becomes active such that production of the cancel signal (7-0) is prevented.

6. Exclusive memory region control circuitry as claimed in claim 1, wherein:
said software lock control means (5-1) are operable, when such a software lock is to be applied to such a region (2) of the main memory (1), to read the content of the small control area (2-1) of the region without the hardware lock, to repeatedly read the small control area whilst it is determined that the region is already subject to a software lock, to cause the said hardware lock control means (4) to apply the hardware lock to the small control area (2-1) when it is determined that the region is not, or is no longer, subject to a software lock, to read the content of the said small control area (2-1) again when the hardware lock is applied, and to write the lock data in the said small control area so as to apply the software lock if the lock data is not already stored in the said small control area (2-1); and
the circuitry further includes hardware lock releasing means (5-14) operable to release the hardware lock applied to the said small control area (2-1) if it is determined that the lock data is already stored therein when the hardware lock is established, or after the lock data is stored in the said small control area (2-1) by said software lock control means (5-1).

7. Exclusive memory region control circuitry as claimed in any preceding claim, wherein the said lock data comprises a lock bit within the small control area (2-1) of the region (2) which, when set, designates that the region has been reserved for the exclusive use of one of the said units.

8. Exclusive memory region control circuitry as claimed in any preceding claim, wherein the said units include a central processing unit (5) and an input/output processing unit (6).

## Patentansprüche

1. Exklusivspeicherzonensteuerschaltungsanordnung zur Verwendung in einer Computervorrichtung, die einen Hauptspeicher (1) hat, auf den eine Vielzahl von verschiedenen Einheiten (5, 6) Zugriff hat, wobei eine Zone (2) des Hauptspeichers einer Softwareverriegelung unterzogen werden kann, die angibt, daß die Zone für die exklusive Verwendung von einer der Einheiten reserviert ist, indem vorbestimmte Verriegelungsdaten in einem kleinen Steuerbereich (2-1) der Zone gespeichert werden, welche Schaltungsanordnung enthält:
ein Hardwareverriegelungssteuermittel (4), das mit den Einheiten (5, 6) verbunden ist, zum Empfangen von Zugriffsadressen von ihnen, die jeweilige Adressen in dem Hauptspeicher (1) bezeichnen, auf die durch die Einheiten zuzugreifen ist, und betriebsfähig ist, wenn solch eine Zugriffsadresse, die von einer der Einheiten empfangen wird, mit einer Verriegelungsadresse übereinstimmt, die eine Adresse in dem Hauptspeicher bezeichnet, die einer Hardwareverriegelung unterliegt, um den Zugriff der betreffenden Einheit auf den Hauptspeicher zu verweigern; und
ein Softwareverriegelungssteuermittel (5-1), das betriebsfähig ist, wenn solch eine Softwareverriegelung auf solch eine Zone (2) des Hauptspeichers (1) anzuwenden ist, um den kleinen Steuerbereich (2-1) der Zone (2) zu lesen und zu bestimmen, falls irgendwelche solche vorbestimmten Verriegelungsdaten in ihm gespeichert sind, daß die Zone schon solch einer Softwareverriegelung unterliegt, und, falls nicht, um solch eine Softwareverriegelung auf die Zone anzuwenden, wobei die Softwareverriegelung auf die Zone durch das Softwareverriegelungssteuermittel zu einer Zeit angewendet wird, wenn die Hardwareverriegelung auf den kleinen Steuerbereich der Zone durch das Hardwareverriegelungssteuermittel (4) angewendet ist;
dadurch gekennzeichnet, daß das Softwareverriegelungssteuermittel (5-1) betriebsfähig ist, um den kleinen Steuerbereich (2-1) der Zone (2) zu lesen, auf die solch eine Softwareverriegelung anzuwenden ist, ohne zuerst solch eine Hardwareverriegelung auf jenen Bereich anzuwenden, und zu verursachen, daß die Hardwareverriegelung auf jenen Bereich nur angewendet wird, falls nach solch einem Lesen des kleinen Steuerbereiches bestimmt wird, daß die Zone nicht schon solch einer Softwareverriegelung unterliegt.

2. Exklusivspeicherzonensteuerschaltungsanordnung nach Anspruch 1, bei der das Softwareverriegelungssteuermittel (5-1) umfaßt:
ein erstes Registermittel (5-11) zum Speichern eines vorbestimmten Verriegelungsmusters, das verwendet wird, um die Verriegelungsdaten in dem kleinen Steuerbereich (2-1) zu speichern;
ein zweites Registermittel (5-12) zum Speichern von Informationen, die aus dem kleinen Steuerbereich (2-1) von solch einer Zone (2) des Hauptspeichers (1) gelesen werden;
ein Vergleichsmittel (5-13) zum Vergleichen des Inhaltes des ersten Registermittels (5-11) und jenes des zweiten Registermittels (5-12); und
ein Steuermittel (5-14), das betriebsfähig ist, wenn das Vergleichsmittel bestimmt, daß der jeweilige Inhalt der ersten und zweiten Registermittel (5-11, 5-12) nicht miteinander übereinstimmt, um ein Verriegelungssignal (7-3) zu erzeugen, welches das Hardwareverriegelungssteuermittel (4) in die Lage versetzt, solch eine Hardwareverriegelung auf den kleinen Steuerbereich (2-1) anzuwenden, und auch betriebsfähig ist, um den kleinen Steuerbereich wieder zu lesen, nachdem die Hardwareverriegelung hergestellt ist, und um ein Entriegelungssignal (7-4) zu erzeugen, welches das Hardwareverriegelungssteuermittel (4) auffordert, die Hardwareverriegelung freizugeben, wenn das Vergleichsmittel (5-13) bestimmt, daß der jeweilige Inhalt der ersten und zweiten Registermittel (5-11, 5-12) miteinander übereinstimmt.

3. Exklusivspeicherzonensteuerschaltungsanordnung nach Anspruch 2, bei der das Steuermittel (5-14) die Operation zum Lesen der Informationen des kleinen Steuerbereiches wiederholt, ohne zu verursachen, daß die Hardwareverriegelung auf den kleinen Steuerbereich angewendet wird, bis das Vergleichsmittel (5-13) bestimmt, daß der jeweilige Inhalt der ersten und zweiten Registermittel (5-11, 5-12) nicht miteinander übereinstimmt.

4. Exklusivspeicherzonensteuerschaltungsanordnung nach Anspruch 2 oder 3, bei der das Steuermittel (5-14) auch betriebsfähig ist, wenn der kleine Steuerbereich (2-1) wieder gelesen wird, nachdem die Hardwareverriegelung hergestellt ist, und das Vergleichsmittel (5-13) bestimmt, daß der jeweilige Inhalt der ersten und zweiten Registermittel (5-11, 5-12) nicht miteinander übereinstimmt, um nach dem Speichern der Verriegelungsdaten in dem kleinen Steuerbereich (2-1) solch ein Entriegelungssignal zum Freigeben der Hardwareverriegelung zu erzeugen.

5. Exklusivspeicherzonensteuerschaltungsanordnung nach Anspruch 2, 3 oder 4, bei der das Hardwareverriegelungssteuermittel (4) umfaßt:
ein Verriegelungsadressenregister (4-2) zum Registrieren der Verriegelungsadresse, die gegenwärtig als einer Hardwareverriegelung unterliegend bezeichnet wird;
ein Adressenvergleichsmittel (4-1) zum Vergleichen solch einer Zugriffsadresse mit dem Inhalt des Verriegelungsadressenregisters (4-2); und
ein Steuermittel, das betriebsfähig ist, wenn das Verriegelungssignal (7-3) gültig wird, um zu verursachen, daß solch eine Verriegelungsadresse in dem Verriegelungsadressenregister (4-2) registriert wird, wodurch solch eine Operation des Adressenvergleichsmittels (4-1) ermöglicht wird, daß ein Unterdrückungssignal (7-0), das den Zugriff auf jene Zugriffsadresse unterdrückt, dadurch erzeugt wird, wenn das Resultat des Vergleichs, der durch das Adressenvergleichsmittel (4-1) vorgenommen wird, so ist, daß die Zugriffsadresse mit der Verriegelungsadresse übereinstimmt, und auch betriebsfähig ist, um die Operation des Adressenvergleichsmittels (4-1) zu untersagen, wenn das Entriegelungssignal (7-4) aktiv wird, so daß die Erzeugung des Unterdrückungssignals (7-0) verhindert wird.

6. Exklusivspeicherzonensteuerschaltungsanordnung nach Anspruch 1, bei der:
das Softwareverriegelungssteuermittel (5-1) betriebsfähig ist, wenn solch eine Softwareverriegelung auf solch eine Zone (2) des Hauptspeichers (1) anzuwenden ist, um den Inhalt des kleinen Steuerbereiches (2-1) der Zone ohne die Hardwareverriegelung zu lesen, um den kleinen Steuerbereich wiederholt zu lesen, während bestimmt wird, daß die Zone schon einer Softwareverriegelung unterliegt, um zu verursachen, daß das Hardwareverriegelungssteuermittel (4) die Hardwareverriegelung auf den kleinen Steuerbereich (2-1) anwendet, wenn bestimmt wird, daß die Zone keiner Softwareverriegelung unterliegt oder ihr nicht mehr unterliegt, um den Inhalt des kleinen Steuerbereiches (2-1) wieder zu lesen, wenn die Hardwareverriegelung angewendet ist, und um die Verriegelungsdaten in den kleinen Steuerbereich zu schreiben, um die Softwareverriegelung anzuwenden, falls die Verriegelungsdaten nicht schon in dem kleinen Steuerbereich (2-1) gespeichert sind; und
die Schaltungsanordnung ferner ein Hardwareverriegelungsfreigabemittel (5-14) enthält, das betriebsfähig ist, um die Hardwareverriegelung freizugeben, die auf den kleinen Steuerbereich (2-1) angewendet wird, falls bestimmt wird, daß die Verriegelungsdaten schon in ihm gespeichert sind, wenn die Hardwareverriegelung hergestellt ist, oder nachdem die Verriegelungsdaten in dem kleinen Steuerbereich (2-1) durch das Softwareverriegelungssteuermittel (5-1) gespeichert sind.

7. Exklusivspeicherzonensteuerschaltungsanordnung nach irgendeinem vorhergehenden Anspruch, bei der die Verriegelungsdaten ein Verriegelungsbit innerhalb des kleinen Steuerbereiches (2-1) der Zone (2) umfassen, welches angibt, wenn es gesetzt ist, daß die Zone für die exklusive Verwendung von einer der Einheiten reserviert worden ist.

8. Exklusivspeicherzonensteuerschaltungsanordnung nach irgendeinem vorhergehenden Anspruch, bei der die Einheiten eine zentrale Verarbeitungseinheit (5) und eine Eingangs-/Ausgangsverarbeitungseinheit (6) enthalten.

## Revendications

1. Circuits de commande d'une région de mémoire exclusive, pour leur utilisation dans un appareil de calcul comportant une mémoire centrale (1) à laquelle ont accès une pluralité d'unités différentes (5, 6),une région (2) de la mémoire centrale qui peut être soumise à un verrouillage de logiciel indiquant que la région est réservée pour l'utilisation exclusive de l'une des unités, par le stockage de données de verrouillage prédéterminées dans une petite zone de commande (2-1) de la région, ces circuits incluant :
des moyens de commande de verrouillage de matériel (4) connectés auxdites unités (5, 6) pour recevoir de celles-ci des adresses d'accès indiquant des adresses respectives dans la mémoire centrale (1) auxquelles les unités doivent avoir accès, et pouvant être mis en fonctionnement, quand cette adresse d'accès reçue de l'une des unités correspond à une adresse de verrouillage indiquant une adresse dans la mémoire centrale qui est soumise à un verrouillage de matériel, pour refuser à l'unité concernée l'accès à la mémoire centrale ; et,
des moyens de commande de verrouillage de logiciel (5-1) pouvant être mis en fonctionnement, quand ce verrouillage de logiciel doit être appliqué à cette région (2) de la mémoire centrale (1), pour lire la petite zone de commande (2-1) de la région (2) et pour déterminer, si des données de verrouillage prédéterminées y sont stockées, que la région est déjà soumise à ce verrouillage de logiciel ; et, si ce n'est pas le cas, pour appliquer ce verrouillage de logiciel à la région, le verrouillage de logiciel étant appliqué à la région par les moyens de commande de verrouillage de logiciel à un temps où le verrouillage de matériel est appliqué à la petite zone de commande de la région par les moyens de commande de verrouillage de matériel (4) ;
caractérisés en ce que lesdits moyens de commande de verrouillage de logiciel (5-1) peuvent être mis en fonctionnement pour lire la petite zone de commande (2-1) de la région (2) à laquelle ce verrouillage de logiciel doit être appliqué sans appliquer d'abord ce verrouillage de matériel à cette zone, et pour faire en sorte que le verrouillage de matériel soit appliqué à cette zone uniquement s'il est déterminé à partir de cette lecture de la petite zone de commande que la région n'est pas déjà soumise à ce verrouillage de logiciel.

2. Circuits de commande d'une région de mémoire exclusive selon la revendication 1, dans lesquels lesdits moyens de commande de verrouillage de logiciel (5-1) comprennent :
un premier moyen à registre (5-11) pour stocker une configuration de verrouillage prédéterminée utilisée pour stocker lesdites données de verrouillage dans la petite zone de commande (2-1) ;
un second moyen à registre (5-12) pour stocker des informations lues dans la petite zone de commande (2-1) de cette région (2) de la mémoire centrale (1) ;
un moyen de comparaison (5-13) pour comparer le contenu dudit premier moyen à registre (5-11) et celui dudit second moyen à registre (5-12) ; et,
un moyen de commande (5-14) pouvant être mis en fonctionnement, quand ledit moyen de comparaison détermine que les contenus respectifs des premier et second moyens à registre (5-11, 5-12) sont en désaccord entre eux, pour produire un signal de verrouillage (7-3) validant lesdits moyens de commande de verrouillage de matériel (4) pour appliquer ce verrouillage de matériel à ladite petite zone de commande (2-1), et pouvant aussi être mis en fonctionnement pour relire ladite petite zone de commande après que le verrouillage de matériel est établi et pour produire un signal de d'éverrouillage (7-4) demandant auxdits moyens de commande de verrouillage de matériel (4) d'abandonner le verrouillage de matériel quand ledit moyen de comparaison (5-13) détermine que les contenus respectifs des premier et second moyens à registre (5-11, 5-12) sont en accord entre eux.

3. Circuits de commande d'une région de mémoire exclusive selon la revendication 2, dans lesquels ledit moyen de commande (5-14) répète l'opération de lecture desdites informations de ladite petite zone de commande, sans faire en sorte que le verrouillage de matériel soit appliqué à ladite petite zone de commande, jusqu'à ce que ledit moyen de comparaison (5-13) détermine que les contenus respectifs des premier et second moyens à registre (5-11, 5-12) sont en désaccord entre eux.

4. Circuits de commande d'une région de mémoire exclusive selon la revendication 2 ou 3, dans lesquels ledit moyen de commande (5-14) peut aussi être mis en fonctionnement, quand ladite petite zone de commande (2-1) est relue après que le verrouillage de matériel est établi et ledit moyen de comparaison (5-13) détermine que les contenus respectifs des premier et second moyens à registre (5-11, 5-12) sont en désaccord entre eux, pour produire ce signal de déverrouillage, afin d'abandonner le verrouillage de matériel, après le stockage des données de verrouillage dans ladite petite zone de commande (2-1).

5. Circuits de commande d'une région de mémoire exclusive selon la revendication 2, 3 ou 4, dans lesquels lesdits moyens de commande de verrouillage de matériel (4) comprennent :
un registre d'adresse de verrouillage (4-2) pour enregistrer ladite adresse de verrouillage alors indiquée comme étant soumise à un verrouillage de matériel ;
un moyen de comparaison d'adresses (4-1) pour comparer cette adresse d'accès au contenu dudit registre d'adresse de verrouillage (4-2) ; et,
un moyen de commande pouvant être mis en fonctionnement, quand ledit signal de verrouillage (7-3) passe à l'état de validation, pour faire en sorte qu'une adresse de verrouillage soit enregistrée dans ledit registre d'adresse de verrouillage (4-2), en validant ainsi l'opération dudit moyen de comparaison d'adresses (4-1) pour qu'un signal d'annulation (7-0), annulant l'accès à cette adresse d'accès, soit ainsi produit quand le résultat de la comparaison exécutée par le moyen de comparaison d'adresses (4-1) est tel que l'adresse d'accès correspond à l'adresse de verrouillage, et pouvant aussi être mis en fonctionnement pour interdire l'opération du moyen de comparaison d'adresses (4-1) quand le signal de déverrouillage (7-4) devient actif de manière à empêcher la production du signal d'annulation (7-0).

6. Circuits de commande d'une région de mémoire exclusive selon la revendication 1, dans lesquels :
lesdits moyens de commande de verrouillage de logiciel (5-1) peuvent être mis en fonctionnement, quand ce verrouillage de logiciel doit être appliqué à cette région (2) de la mémoire centrale (1), pour lire le contenu de la petite zone de commande (2-1) de la région sans le verrouillage de matériel, pour lire de façon répétitive la petite zone de commande alors qu'il est déterminé que la région est déjà soumise à un verrouillage de logiciel, pour faire en sorte que lesdits moyens de commande de verrouillage de matériel (4) appliquent le verrouillage de matériel à la petite zone de commande (2-1) quand il est déterminé que la région n'est pas, ou n'est plus, soumise à un verrouillage de logiciel, pour relire le contenu de ladite petite zone de commande (2-1) quand le verrouillage de matériel est appliqué, et pour écrire les données de verrouillage dans ladite petite zone de commande de manière à appliquer le verrouillage de logiciel si les données de verrouillage ne sont pas déjà stockées dans ladite petite zone de commande (2-1) ; et,
les circuits comprennent en outre un moyen d'abandon de verrouillage de matériel (5-14) pouvant être mis en fonctionnement pour abandonner le verrouillage de matériel appliqué à ladite petite zone de commande (2-1) s'il est déterminé que les données de verrouillage y sont déjà stockées quand le verrouillage de matériel est établi, ou après que les données de verrouillage sont verrouillées dans ladite petite zone de commande (2-1) par lesdits moyens de commande de verrouillage de logiciel (5-1).

7. Circuits de commande d'une région de mémoire exclusive selon l'une quelconque des revendications précédentes, dans lesquels lesdites données de verrouillage comprennent un bit de verrouillage à l'intérieur de la petite zone de commande (2-1) de la région (2) qui, quand il est établi, indique que la région a été réservée pour l'utilisation exclusive de l'une desdites unités.

8. Circuits de commande d'une région de mémoire exclusive selon l'une quelconque des revendications précédentes, dans lesquels lesdites unités comprennent une unité centrale de traitement (5) et une unité de traitement d'entrée/de sortie (6).
